# EUROPÄISCHE PATENTSCHRIFT

(11) **EP 4 511 895 B1**
(45) Veröffentlichungstag und Bekanntmachung des Hinweises auf die Patenterteilung: **11.06.2025**
(21) Anmeldenummer: 23772400.0
(22) Anmeldetag: 08.08.2023
(51) Int. Cl.: H01M 8/04014, H01M 8/04089, H01M 8/04119

(54) **BRENNSTOFFZELLENSYSTEM ZUR ERZEUGUNG ELEKTRISCHER ENERGIE**
FUEL CELL SYSTEM FOR GENERATING ELECTRICAL ENERGY
SYSTÈME DE PILE À COMBUSTIBLE POUR GÉNÉRER DE L'ÉNERGIE ÉLECTRIQUE

(30) Priorität: 09.08.2022 AT 506122022
(43) Veröffentlichungstag der Anmeldung: 26.02.2025
(73) Patentinhaber: AVL List GmbH, 8020 Graz (AT)
(72) Erfinder: NEUBAUER, Raphael, 8042 Graz (AT); GOLL, Markus, 8010 Graz (AT); PANDYA, Bhargav, 8020 Graz (AT)
(86) Internationale Anmeldenummer: PCT/AT2023/060263
(87) Internationale Veröffentlichungsnummer: WO 2024/031113

(56) Entgegenhaltungen:
- WO-A1-2021/199103
- WO-A2-2006/121992
- US-A1- 2006 003 207
- US-A1- 2007 017 368
- US-A1- 2008 187 789

## Beschreibung

Die vorliegende Erfindung betrifft ein Brennstoffzellensystem zur Erzeugung elektrischer Energie sowie ein Verfahren für eine Rezirkulation von Anodenabgas in einen solchen Brennstoffzellensystem.

Es ist bekannt, dass Brennstoffzellensysteme für die Erzeugung elektrischer Energie eingesetzt werden. Hierfür sind diese Brennstoffzellensysteme üblicherweise mit Brennstoffzellenstapeln ausgestattet, in welchen eine Vielzahl einzelner Brennstoffzellen jeweils mit einem Anodenabschnitt und einem Kathodenabschnitt gestapelt angeordnet sind. Für die Erzeugung der elektrischen Energie wird Brenngas und üblicherweise Umgebungsluft dem Brennstoffzellenstapel zugeführt, sodass dort unter Erzeugung elektrischer Energie eine chemische Umsetzung dieser Gase stattfinden kann.

Als Brenngas wird bei bekannten Brennstoffzellensystemen üblicherweise entweder Wasserstoff oder Erdgas als Brenngas eingesetzt. Darüber hinaus ist es bekannt, dass ein Teil des Brenngases, welches bei der Umsetzung im Brennstoffzellenstapel nicht umgesetzt wird, als Rezirkulationsgas wieder dem Brennstoffzellenstapel für einen weiteren Durchlauf zugeführt wird, um die Effizienz in der Nutzung des Brenngases zu steigern.

Nachteilhaft bei den bekannten Lösungen ist es, dass insbesondere bei der Verwendung von Wasserstoff als Brenngas die Rezirkulation die Effizienz im Betrieb reduzieren kann. Wird Wasserstoff einem Brennstoffzellenstapel zugeführt, so wird im Anodenabschnitt dieser Wasserstoff zu einer Mischung aus Wasser und einem verbleibenden Rest an Wasserstoff im Anodenabgas umgesetzt. Bei der Rezirkulation dieser Gasmischung kann es dazu kommen, dass durch das enthaltene Wasser die Nernstspannung deutlich absinkt. Das Absinken der Nernstspannung für den Brennstoffzellenstapel führt zu einer Reduktion der Effizienz, welche in üblicher Weise die Erhöhung der Effizienz durch die Rezirkulation ausgleicht. Mit anderen Worten führt beim Betrieb eines Brennstoffzellensystems mit Wasserstoff die Rezirkulation nicht oder nur in reduzierter Weise zu der gewünschten Steigerung der Effizienz.

Es ist zwar bereits grundsätzlich bekannt, dass bei der Rezirkulation ein Abkühlen des Anodenabgases zur Kondensation eines Teils des enthaltenen Wassers und zur Abtrennung dieses Kondenswassers verwendet werden kann, jedoch sind diese Konstruktionen sehr komplex und aufwendig. Insbesondere beruhen sie darauf, dass ein externer Kühlkreislauf eingesetzt werden muss, welcher mit einer externen Wärmesenke in der Lage ist, Kühlmittel zur Rezirkulationsleitung zu führen, um eine Kodensation des dampfförmigen Wassers im Anodenabgas zu bewirken. Das Hinzufügen eines zusätzlichen Kühlkreislaufes und der entsprechenden Peripherie führt zu einer unerwünschten Steigerung der Komplexität und der Kosten für ein Brennstoffzellensystem.

Weitere Brennstoffzellensysteme mit einer Anodenrezirkulationsleitung sind beispielsweise aus der US 2008/187789 A1 A1, der US 2007/017368 A1 und der WO 2021199103 A1 bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise auch beim Betrieb mit Wasserstoff in einem Brennstoffzellensystem Kondenswasser abzuführen.

Die voranstehende Aufgabe wird gelöst durch ein Brennstoffzellensystem mit den Merkmalen des Anspruchs 1 sowie ein Verfahren mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Brennstoffzellensystem beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Erfindungsgemäß wird ein Brennstoffzellensystem vorgeschlagen zur Erzeugung elektrischer Energie. Ein solches Brennstoffzellensystem weist einen Brennstoffzellenstapel mit einem Anodenabschnitt und einem Kathodenabschnitt auf. Der Anodenabschnitt ist mit einem Anodenzuführabschnitt für ein Zuführen von Anodenzuführgas und mit einem Anodenabführabschnitt zum Abführen von Anodenabgas ausgestattet. Darüber hinaus geht der Anodenzuführabschnitt in einen Anoden-Rezirkulationsabschnitt über zum Rezirkulieren des Anodenabgases als Anoden-Rezirkulationsgas zum Anodenzuführabschnitt. Der Kathodenabschnitt weist ebenfalls einen Kathodenzuführabschnitt zum Zuführen von Kathodenzuführgas und einen Kathodenabführabschnitt zum Abführen von Kathodenabgas auf. Ein erfindungsgemäßes Brennstoffzellensystem zeichnet sich dadurch aus, dass im Anoden-Rezirkulationsabschnitt eine aktive Kühlvorrichtung zum Kühlen des Anoden-Rezirkulationsgases angeordnet ist. Stromabwärts der aktiven Kühlvorrichtung ist ein Wasserauslass für einen Auslass des in der aktiven Kühlvorrichtung kondensierten Kondenswasser angeordnet. Weiter stromabwärts des Wasserauslasses ist ein Mischabschnitt angeordnet für ein Vermischen des Anoden-Rezirkulationsgases mit Brenngas und für eine Zufuhr als Anodenzuführgas in den Anodenzuführabschnitt.

Der erfindungsgemäße Kerngedanke beruht darauf, eine Rezirkulation von Anodenabgas als Anoden-Rezirkulationsgas zu gewährleisten. Die Rezirkulation des Anoden-Rezirkulationsgases erfolgt in getrockneter Weise, nämlich durch Führung über eine aktive Kühlvorrichtung. In dieser aktiven Kühlvorrichtung wird die Temperatur des Anoden-Rezirkulationsgases unter die Siedetemperatur von Wasser, also je nach Drucksituation und Partialdruck, der von der Zusammensetzung des Gases abhängt, unter ca. 100 °C, gebracht. Dies führt dazu, dass der enthaltene Wasserdampf im Anoden-Rezirkulationsgas auskondensiert und als flüssiges Kondenswasser vorliegt.

Stromabwärts der aktiven Kühlvorrichtung ist ein Separator als Wasserauslass vorgesehen, in welchem die kondensierten Bestandteile und damit das Kondenswasser von den gasförmigen Bestandteilen des Anoden-Rezirkulationsgases abgetrennt werden. Damit kann das flüssige Kondenswasser aus dem System ausgebracht und zum Beispiel an die Umgebung abgegeben werden. Das verbleibende Anoden-Rezirkulationsgas kann auch als getrocknetes Anoden-Rezirkulationsgas bezeichnet werden und entsprechend in dieser getrockneten Situation einem Mischabschnitt zugeführt werden. In diesem Mischabschnitt, welcher zum Beispiel als Ejektorvorrichtung, als Mischkammer oder in ähnlicher Weise ausgebildet sein kann, erfolgt eine Vermischung des Anoden-Rezirkulationsgases mit einem zugeführten Brenngas von einer Brenngasquelle. Je nachdem, wieviel Anoden-Rezirkulationsgas zur Verfügung steht, kann entsprechend die notwendige Restmenge an Brenngas zugemischt werden. Das Mischgas aus Brenngas und Anoden-Rezirkulationsgas wird dann als Anodenzuführgas wieder dem Anodenabschnitt des Brennstoffzellenstapels zugeführt.

Der erfindungsgemäße Kerngedanke beruht nun unter anderem darauf, dass für das Kondensieren des Kondenswassers im Anoden-Rezirkulationsgas oder im Anodenabgas keine externe Kältequelle und auch kein separater externer Kältekreislauf notwendig ist. Vielmehr ist die aktive Kühlvorrichtung in erfindungsgemäßer Weise vorgesehen. Der Kondensationsvorgang in dieser aktiven Kühlvorrichtung erfolgt erfindungsgemäß frei von der Einwirkung externer Kühlquellen, insbesondere frei von einem externen Kühlkreislauf des Brennstoffzellensystems.

Es sei noch darauf hingewiesen, dass selbstverständlich in einem komplexen Brennstoffzellensystemen an anderen Positionen Kühlkreisläufe vorgesehen sein können, um gewünschte Temperiervorgänge durchführen zu können. Insbesondere bei Brennstoffzellensystemen, welche als SOFC-System ausgebildet sind, sind sehr hohe Temperaturen zu erwarten, sodass zum Beispiel Teile des Brennstoffzellenstapels mit einer externen Kühlvorrichtung ausgebildet sein können. Erfindungsgemäß wird jedoch auch eine solche vorhandene externe Kühlquelle nicht für die Kondensierfunktion des Anoden-Rezirkulationsgases und des Anodenabgases verwendet.

Erfindungsgemäß leistet die Integration der Kondensationsfunktion mittels der aktiven Kühlvorrichtung die gewünschte Kondensation von Kondenswasser im Anoden-Rezirkulationsgas. Damit wird getrocknetes Anoden-Rezirkulationsgas dem Brenngas zugemischt und entsprechend die gewünschte Effizienzsteigerung durch die Rezirkulation ohne die Inkaufnahme einer reduzierten Nernstspannung bei ungetrocknetem Anoden-Rezirkulationsgas erreicht. Im Vergleich zu den bekannten Lösungen wird dieser Trocknungsschritt und die damit verbundene Effizienzsteigerung im Betrieb des Brennstoffzellensystems ohne zusätzliche komplexe Bauteile erreicht.

Im Ergebnis kann neben der Effizienzsteigerung insbesondere sogar ein kleinerer Ejektor verwendet werden, da durch die Abtrennung des unerwünschten Kondenswassers entsprechend geringere Volumenströme dem Brenngas beigemischt werden müssen.

Bei der erfindungsgemäßen Lösung des Brennstoffzellensystems wird nun kein separater externer Kühlkreislauf mehr verwendet, sondern an dessen Stelle tritt die aktive Kühlvorrichtung. Unter einer aktiven Kühlvorrichtung ist im Rahmen der vorliegenden Erfindung eine aktive Erzeugung von Kälte und damit eine aktive Erzeugung einer Wärmesenke zu verstehen. Dabei sind insbesondere thermisch aktivierte und/oder elektrisch aktivierte Wärmesenken denkbar. Eine thermisch aktivierte Wärmesenke kann zum Beispiel eine Absorptionswärmepumpe darstellen. Auch die Verwendung von elektrischen Kompressoren und dementsprechend durch Druckänderung über ein Kältemittel erzeugte Kälte kann hier als elektrisch aktivierte Kühlvorrichtung eingesetzt werden. Selbstverständlich sind grundsätzlich auch andere aktive Kühlvorrichtungen denkbar, welche an Ort und Stelle die gewünschte Wärmesenke erzeugen, ohne auf einen separaten externen Kühlkreislauf zurückgreifen zu müssen.

Wesentliche Vorteile eines erfindungsgemäßen Brennstoffzellensystems rühren insbesondere daher, dass über die aktive Kühlung eine maximale Rezirkulationsrate von bis zu 100% an Anodenabgas als Anoden-Rezirkulationsgas möglich ist. Mit anderen Worten ist es möglich, den Anodenabschnitt als sogenanntes totes Ende oder Dead-End auszubilden, da das dort abgeführte Anodenabgas zu 100% und damit vollständig als Anoden-Rezirkulationsgas wieder dem Anodenzuführgas zugeführt wird. Dies erlaubt es, die Komplexität des Gesamtsystems des Brennstoffzellensystems weiter zu reduzieren und insbesondere auch den Aufwand für eine Abgasnachbehandlung im Wesentlichen vollständig zu vermeiden. Bei bekannten Lösungen muss das gesammelte Abgas des Brennstoffzellensystems üblicherweise nachbehandelt werden, zum Beispiel mithilfe eines Oxidationskatalysators, um restliches und verbliebenes Brenngas im Anodenabgas zu oxidieren und damit gezielt zu verbrennen, bevor das gemischte Abgas in die Umgebung entlassen wird. Dadurch, dass bei der erfindungsgemäßen Ausführung eines Brennstoffzellensystems nun eine Rückführrate und damit eine Rezirkulationsrate von 100% des Anodenabgases möglich ist, ist überhaupt kein Auslass dieses Anodenabgases an die Umgebung mehr vorgesehen. Eine Nachbehandlung des Anodenabgases, welches eben nicht mehr an die Umgebung ausgelassen wird, ist damit ebenfalls nicht mehr notwendig. Zuletzt ist noch darauf hinzuweisen, dass auch der Mischabschnitt, zum Beispiel in Form einer Injektorvorrichtung, mit weniger Druck auf der Primärseite arbeiten kann und dementsprechend kleiner und kostengünstiger ausgebildet werden kann.

Es ist vorgesehen, dass bei einem erfindungsgemäßen Brennstoffzellensystem die aktive Kühlvorrichtung eine thermisch aktivierte Kühlvorrichtung aufweist, insbesondere aufweisend eine Absorptionswärmepumpe. Dabei steht die aktive Kühlvorrichtung in wärmeübertragendem Kontakt mit dem Kathodenabführabschnitt und ist für eine thermische Aktivierung mittels der im Kathodenabgas enthaltenen Wärme ausgestattet. Wie bereits einleitend erläutert worden ist, ist eine thermisch aktivierte Kühlvorrichtung eine mögliche Ausführungsform einer erfindungsgemäßen aktiven Kühlvorrichtung. Bei dieser Ausführungsform wird darüber hinaus für die thermische Aktivierung Wärme verwendet, welche das Brennstoffzellensystem selbst bereitstellt. Bei der Umsetzung der einzelnen Gase im Brennstoffzellenstapel entsteht als Nebenprodukt eine große Menge an Wärme. Diese entstandene Wärme heizt das Anodenabgas und das Kathodenabgas entsprechend auf. Die in dem Kathodenabgas vorhandene Wärme kann nun zumindest teilweise für die thermische Aktivierung einer solchen Kühlvorrichtung verwendet werden. Eine thermische aktivierte Kühlvorrichtung bedeutet also, dass heißes Kathodenabgas innerhalb dieser thermisch aktivierten Kühlvorrichtung als Energie verwendet wird, dabei gekühlt wird und auf diese Weise eine Wärmesenke zur Verfügung stellt. Um diese Wärmeenergie zur Kühlung zu verwenden, ist in einer thermisch aktivierten Kühlvorrichtung üblicherweise eine Absorptionswärmepumpe vorgesehen, sodass es möglich wird, über Absorptionsvorgänge und Desorptionsvorgänge gezielt eine Wärmesenke für das Anodenabgas als Anoden-Rezirkulationsgas zu erzeugen. Hier ist nochmals gut sichtbar, wie eine solche aktive Kühlvorrichtung gerade keine externe Energie und auch keinen externen Kühlkreislauf benötigt. Neben einer möglicherweise notwendigen Umwälzpumpe für das Kühlmittel zwischen Absorptionsabschnitt und Desorptionsabschnitt einer solchen thermisch aktivierten Kühlvorrichtung, ist kein externer Energiezufluss und insbesondere keine Zuführung eines externen gekühlten Kühlmittels notwendig.

Alternativ oder zusätzlich ist es denkbar, dass bei einem erfindungsgemäßen Brennstoffzellensystem die aktive Kühlvorrichtung eine elektrisch aktivierte Kühlvorrichtung aufweist. Dies kann zusätzlich oder alternativ zu einer thermisch aktivierten Kühlvorrichtung vorgesehen sein. Dabei kann es sich insbesondere um eine Kältekreislaufmaschine handeln, welche mithilfe eines Kompressors eine klassische Wärmepumpe ausbildet. Auf diese Weise ist es möglich, durch das Einbringen elektrischer Energie direkt an Ort und Stelle der aktiven Kühlvorrichtung die gewünschte Wärmesenke zur Verfügung zu stellen und entsprechend die Kondensationsfunktion für das Kondenswasser im Anoden-Rezirkulationsgas zur Verfügung zu stellen.

Weitere Vorteile können erzielt werden, wenn bei einem erfindungsgemäßen Brennstoffzellensystem der Anoden-Rezirkulationsabschnitt eine Kondensatorvorrichtung in wärmeübertragenem Kontakt mit einem Kathodenzuführabschnitt aufweist. Dies dient dem Kühlen des Anoden-Rezirkulationsgases durch Aufheizen des Kathodenzuführgases. Dabei ist stromabwärts der Kondensatorvorrichtung und stromaufwärts der aktiven Kühlvorrichtung ein weiterer Wasserauslass für einen Auslass des in der Kondensatorvorrichtung kondensierten Kondenswassers angeordnet. Mit anderen Worten wird bei dieser Ausführungsform nun ein zweistufiges Kühlen und damit auch ein zweistufiges Kondensieren möglich. Das bedeutet also, dass das Anodenabgas den Anodenabschnitt mit hoher Auslasstemperatur verlässt und über mehrere Schritte auf die gewünschte Temperatur gebracht wird, mit welcher es als Anoden-Rezirkulationsgas dem Brenngas beigemischt wird. Hier sind zwei Schritte der Kühlung und auch zwei Schritte des Kondensierens ausgebildet, sodass in einem ersten Schritt das noch heiße Anodenabgas über die Umgebungsluft gekühlt wird, wobei die Umgebungsluft in unterschiedlichen Regionen unterschiedliche Umgebungslufttemperaturen aufweisen kann. Insbesondere in heißen Regionen kann damit die angesaugte Umgebungsluft als Kathodenzuführgas auch 50° Celsius und mehr aufweisen, wodurch die Kühlwirkung auf das heiße Anodenabgas begrenzt ist. Da auch nur in begrenzter Weise der Volumenstrom an Luft als Kathodenzuführgas flexibel variierbar ist, kann dieser Kühlung und Kondensierung nun eine erfindungsgemäße aktive Kühlvorrichtung nachgeordnet werden, die jedoch im Vergleich zur allgemeinen Lösung kleiner und kompakter ausgebildet werden kann, da bereits eine Vorkondensierung durch die Kondensatorvorrichtung zur Verfügung gestellt worden ist. Das an den beiden Wasserauslässen ausgeführte Kühlwasser durch die entsprechenden Separatoren in den Wasserauslässen kann separat in die Umgebung abgeführt werden oder auch zusammengeführt und gemeinsam abgeführt werden.

Darüber hinaus kann es von Vorteil sein, wenn bei einem erfindungsgemäßen Brennstoffzellensystem der Kathodenabführabschnitt frei von einer Katalysatorvorrichtung und/oder einem Brenner ausgebildet ist. Wie bereits erläutert worden ist, dient ein erfindungsgemäßes Brennstoffzellensystem insbesondere einer vollständigen Rezirkulation des Anodenabgases als Anoden-Rezirkulationsgas. Damit ist kein Anodenabgas mehr an die Umgebung auszuleiten und somit auch eine Nachbehandlung möglicherweise vorhandenen Restbrennstoffs in diesem Anodenabgas nicht notwendig. Vielmehr wird ausschließlich das Kathodenabgas an die Umgebung entlassen, welches jedoch bei einer funktionstüchtigen Brennstoffzelle frei von Brennstoff ist. Der Verzicht auf eine Katalysatorvorrichtung und/oder einen Brenner führt zu einer kleineren, leichteren und billigeren Bauweise des gesamten Brennstoffzellensystems.

Darüber hinaus kann es Vorteile mit sich bringen, wenn bei einem erfindungsgemäßen Brennstoffzellensystem der Anodenabführabschnitt und der Anoden-Rezirkulationsabschnitt frei von einem Aufteilabschnitt ausgebildet sind für eine vollständige oder im Wesentlichen vollständige Rezirkulation des Anodenabgases als Anoden-Rezirkulationsgas. Wie bereits erläutert worden ist, wird dies erst dadurch möglich, dass eine aktive Kühlvorrichtung verwendet wird und zieht weitere Vorteile nach sich, wie zum Beispiel die im voranstehenden Absatz beschriebene Verzichtsmöglichkeit auf eine Katalysatorvorrichtung. Es entstehen also keine an die Umgebung abzuführenden Abgase auf der Anodenseite und damit auch keine Nachbehandlungsnotwendigkeit. Durch den Verzicht auf einen solchen Aufteilabschnitt wird es nun auch möglich, das Gesamtsystem des Brennstoffzellensystems, ohne eine solches Bauteil, damit einfacher, kostengünstiger und kleiner auszubilden.

Ebenfalls Vorteile bringt es mit sich, wenn bei einem erfindungsgemäßen Brennstoffzellensystem im Anoden-Rezirkulationsabschnitt stromabwärts der aktiven Kühlvorrichtung und stromabwärts des Wasserauslasses ein Ablassventil angeordnet ist, für ein kontrolliertes Ablassen wenigstens eines Teils des Rezirkulationsgases. Dadurch, dass bei einem erfindungsgemäßen Brennstoffzellensystem vorzugsweise eine vollständige Rezirkulationsrate für das Anodenabgas vorgesehen ist, kann es dazu kommen, dass diese vollständige Rückführung in Sondersituationen für das Brennstoffzellensystem unerwünscht ist. Um eine Regelungsflexibilität zur Verfügung zu stellen, kann hier mithilfe eines Ablassventils zumindest ein qualitativer, vorzugsweise ein quantitativer Kontrollweise, ein Teil des Rezirkulationsgases an die Umgebung abgeleitet werden. Da das Anoden-Rezirkulationsgas üblicherweise noch Restmengen an Brennstoff aufweist, kann in ein solches Ablassventil vorzugsweise eine Katalysatorvorrichtung integriert sein, um für einen solchen Sonderfall das Anodenabgas als Anoden-Rezirkulationsgas katalytisch nachzubehandeln und auf diese Weise den Restbrennstoff zu oxidieren. Insbesondere ist das Ablassventil ausschließlich für ein ein kontrolliertes Ablassen wenigstens eines Teils des Rezirkulationsgases vorgesehen und ausgebildet. Dadurch erfolgt insbesondere kein Wärmeübertrag in irgendeiner Weise noch ist hierdurch eine permanente Aufteilung geschaffen. Ist der Wasserstoff zumindest nahezu rein, ist ein solches Ablassventil in der Regel nicht vorgesehen.

Es kann vorteilhaft sein, wenn bei einem erfindungsgemäßen Brennstoffzellensystem der Anodenabführabschnitt einen Anodenabführ-Wärmetauscher aufweist, in wärmeübertragendem Kontakt mit dem Anodenzuführabschnitt für eine Wärmeübertragung vom Anodenabgas auf das Anodenzuführgas. Hier wird eine weitere Steigerung der Effizienz aus Sicht der Temperatur möglich. Im Zusammenhang mit den später noch erläuterten weiteren möglichen unterschiedlichen Wärmetauschern entsteht somit zusammen mit der aktiven Kühlvorrichtung ein Wärmetauschersystem, welches auch Temperiersystem genannt werden kann, das es erlaubt, einen möglichst großen Anteil an Restwärme im Anodenabgas wie auch im Kathodenabgas wiederzuverwerten und für andere Funktionen, wie zum Beispiel das Kondensieren, aber auch das Zuführen und Konditionieren von Anodenzuführgas und Kathodenzuführgas, zu verwenden. Bei dieser Ausführungsform ist entsprechend eine Möglichkeit gegeben, das heiße Anodenabgas abzukühlen und diese Energie zu verwenden, um das Anodenzuführgas bei der Führung zum Anodenabschnitt aufzuheizen. Dies führt als Nebeneffekt dazu, dass an der aktiven Kühlvorrichtung bereits vorgekühltes Anodenabgas ankommt, sodass entsprechend von niedrigeren Eingangstemperaturen an der aktiven Kühlvorrichtung ausgegangen werden kann und entsprechend die notwendige Kühlleistung geringer ausfällt.

Ebenfalls Vorteile kann es mit sich bringen, wenn bei einem erfindungsgemäßen Brennstoffzellensystem der Mischabschnitt als Ejektorvorrichtung ausgebildet ist, mit einer Brennstoffzufuhr von Brenngas an einem Primäranschluss der Ejektorvorrichtung und dem Anoden-Rezirkulationsabschnitt am Sekundäranschluss der Ejektorvorrichtung. Die Verwendung einer Ejektorvorrichtung als Alternative zu klassischen Gebläsevorrichtungen für den Mischabschnitt bringt viele Vorteile mit sich. Zum einen wird auf rotierende Bauteile und entsprechende Verschleißteile verzichtet. Zum anderen wird das Vermischen und das Fördern vorzugsweise in einem gemeinsamen Bauteil kombiniert, sodass insbesondere dann, wenn eine Brenngasquelle mit hohem Förderdruck zur Verfügung steht, keine separate Fördervorrichtung im Anodenzuführabschnitt mehr notwendig ist. Es reicht vielmehr aus, das entsprechende Brenngas mit dem gewünschten Vordruck am Primäranschluss der Ejektorvorrichtung anzulegen, sodass die entsprechende sich einstellende Saugwirkung am Sekundäranschluss der Ejektorvorrichtung das getrocknete Anoden-Rezirkulationsgas zum Vermischen ansaugt. Die Gesamteffizienz wird damit für ein erfindungsgemäßes Brennstoffzellensystem weiter gesteigert und insbesondere die Verschleißarmut verbessert.

Ein weiterer Vorteil ist erzielbar, wenn bei einem erfindungsgemäßen Brennstoffzellensystem der Kathodenzuführabschnitt einen Kathodenzuführ-Wärmetauscher aufweist, in wärmeübertragendem Kontakt mit dem Kathodenabführabschnitt für eine Wärmeübertragung vom Kathodenabgas auf das Kathodenzuführgas. Ähnlich dem Vorheizen des Anodenzuführgases steigert es die Effizienz im Betrieb des Brennstoffzellensystems weiter, wenn auch das Kathodenzuführgas vorkonditioniert wird, um mit möglichst hoher Temperatur, und damit insbesondere nahe an der Betriebstemperatur des Brennstoffzellenstapels, in den Kathodenabschnitt einzutreten. Da das Kathodenabgas als Ergebnis der chemischen Reaktion innerhalb des Brennstoffzellenstapels auf eine entsprechend hohe Auslasttemperatur gebracht worden ist, kann diese hohe Temperatur hier genutzt werden, um teilweise an das Kathodenzuführgas abgegeben zu werden. Dies entspricht also einem Vorkonditionieren in Form eines Vorwärmens vom Kathodenabgas auf das Kathodenzuführgas. Diese Rückgewinnung der im Kathodenabgas enthaltenen Wärme steigert die Effizienz noch weiter und vermeidet einen Wärmeverluste durch das Kathodenabgas.

Ebenfalls Vorteile bringt es mit sich, wenn bei einem erfindungsgemäßen Brennstoffzellensystem im Anodenzuführabschnitt, vorzugsweise stromabwärts eines Anodenzuführ-Wärmetauschers, ein Kathodenabführ-Wärmetauscher angeordnet ist für einen Wärmeübergang vom Kathodenabgas an das Anodenzuführgas. Dies erlaubt es, auch im Kathodenabgas enthaltene Wärme zusätzlich oder alternativ in das Anodenzuführgas zu übertragen. Dies erlaubt es darüber hinaus in Kombination mit einem Anodenzuführ-Wärmetauscher die entsprechende Vorheizfunktionalität noch weiter zu steigern oder mit anderen Worten das Anodenzuführgas auf eine noch höhere Temperatur zu bringen. Wie dargestellt, kann an einer Vielzahl von Positionen nun über Wärmetauscherfunktionen das System von Wärmetauschern in einem erfindungsgemäßen Brennstoffzellensystem ausgestattet sein. Selbstverständlich können einzelne Wärmetauscher dieses Wärmetauschersystems über Ventile kontrolliert werden, sodass insbesondere flexibel je nach Betriebssituation unterschiedliche Teile dieses Wärmetauschersystems aktiviert oder deaktiviert werden können. Damit kann gezielt und flexibel auf unterschiedliche Betriebssituationen reagiert und immer die maximale Temperatureffizienz erreicht werden.

Ebenfalls vorteilhaft kann es sein, wenn bei einem erfindungsgemäßen Brennstoffzellensystem im Kathodenzuführabschnitt ein Kathodenzuführ-Wärmetauscher angeordnet ist für einen Wärmeübergang vom Kathodenabgas auf das Kathodenzuführgas. Auch dies ist alternativ, wie aber auch zusätzlich zu den anderen genannten Wärmetauschern denkbar, wobei darauf hinzuweisen ist, dass vorzugsweise Ventile die unterschiedlichen Wärmetauscher aktivieren und deaktivieren können. Auch hier ist es wieder möglich, durch den Wärmeübergang Restwärme aus dem Kathodenabgas zu nutzen, um eine Vorkonditionierung in Form eines Vortemperierens des Kathodenzuführgases gewährleisten zu können und damit die Betriebseffizienz des Brennstoffzellensystems weiter zu steigern.

Darüber hinaus von Vorteil kann es sein, wenn bei einem erfindungsgemäßen Brennstoffzellensystem im Anodenzuführabschnitt stromaufwärts des Mischabschnitts ein Kontrollventil zur Kontrolle des Volumenstroms an Brenngas durch den Mischabschnitt angeordnet ist. Damit wird es möglich, insbesondere von einer druckbeaufschlagten Brenngasquelle in kontrollierter Weise die Menge und den Druck des Brenngases zu regeln. Je nach aufgeteilter Menge an Anoden-Rezirkulationsgas kann nun eine entsprechend daran angepasste Menge an Brenngas zugemischt werden, sodass immer die gewünschte Zusammensetzung und immer der gewünschte Volumenstrom an Anodenzuführgas auch tatsächlich dem Anodenabschnitt zur Verfügung gestellt wird. Bevorzugt handelt es sich bei diesem Kontrollventil daher um ein quantitativ kontrollierbares Kontrollventil, um entsprechend flexibel auf unterschiedlichste Betriebssituationen des Brennstoffzellensystems reagieren zu können.

Darüber hinaus ist es von Vorteil, wenn bei einem erfindungsgemäßen Brennstoffzellensystem der Anodenabführabschnitt frei von einem externen Kühlkreislauf ausgebildet ist. Wie bereits erläutert worden ist, ist der Kerngedanke der vorliegenden Erfindung darauf gerichtet, möglichst effizient und ohne zusätzliche Komplexität diese Kondensationsfunktion zur Verfügung zu stellen. Die Ausbildung des Anodenabführabschnitts frei von externen Kühlkreisläufen bezeichnet genau diese reduzierte Komplexität, da die Kondensierfunktion im zumindest teilweise durch die Wärmesenke der aktiven Kühlvorrichtung, gewährleistet ist.

Ebenfalls von Vorteil ist es, wenn bei einem erfindungsgemäßen Brennstoffzellensystem im Kathodenzuführabschnitt ein Kathoden-Mischabschnitt, insbesondere in Form einer Ejektorvorrichtung, angeordnet ist. An diese Ejektorvorrichtung ist am Sekundäranschluss ein Kathoden-Rezirkulationsabschnitt fluidkommunizierend verbunden, für eine Rezirkulation eines Teils des Kathodenabgases als Kathoden-Rezirkulationsgas. In Kombination mit der Rezirkulation zum Anodenabschnitt kann dies auch als doppelte Rezirkulation bezeichnet werden. Damit wird es möglich, auch das Kathodenabgas und darin enthaltenen Restsauerstoff wieder dem Kathodenabschnitt als Beimischung mit dem Kathodenzuführgas zuzuführen.

Grundsätzlich kann es im Rahmen der Erfindung auch von Vorteil sein, wenn eine regenerative Adsorption vorgesehen ist. Dabei wird Wasser, welches im Wasserdampf ist, regenerativ abgeschieden, wofür beispielsweise Silikongel-Pads vorgesehen sein können. Insbesondere sind regenerative Abscheideelemente wie Silikongel-Pads in der aktiven Kühlvorrichtung angeordnet.

Ein weiterer Gegenstand der vorliegenden Erfindung ist ein Verfahren für eine Rezirkulation von einem Anodenabgas in einem erfindungsgemäßen Brennstoffzellensystem als Anoden-Rezirkulationsgas aufweisend die folgenden Schritte:
- Kühlen des Anoden-Rezirkulationsgases durch aktives Kühlen mittels der aktiven Kühlvorrichtung unter die Siedetemperatur von Wasser,
- Abtrennen des kondensierten Kondenswassers aus dem Anoden-Rezirkulationsgas,
- Mischen des getrockneten Rezirkulationsgases mit einem Brenngas zu Anodenzuführgas.

Der Einsatz eines erfindungsgemäßen Verfahrens bei einem erfindungsgemäßen Brennstoffzellensystem bringt die gleichen Vorteile mit sich, wie sie ausführlich mit Bezug auf ein erfindungsgemäßes Brennstoffzellensystem erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Ausführungsform eines erfindungsgemäßen Brennstoffzellensystems,
- Fig. 2: eine weitere Ausführungsform eines erfindungsgemäßen Brennstoffzellensystems,
- Fig. 3: eine weitere Ausführungsform eines erfindungsgemäßen Brennstoffzellensystems,
- Fig. 4a: eine weitere Ausführungsform eines erfindungsgemäßen Brennstoffzellensystems,
- Fig. 4b: eine weitere Ausführungsform eines erfindungsgemäßen Brennstoffzellensystems,
- Fig. 5: eine weitere Ausführungsform eines erfindungsgemäßen Brennstoffzellensystems,
- Fig. 6: eine weitere Ausführungsform eines erfindungsgemäßen Brennstoffzellensystems,
- Fig. 7: eine weitere Ausführungsform eines erfindungsgemäßen Brennstoffzellensystems.

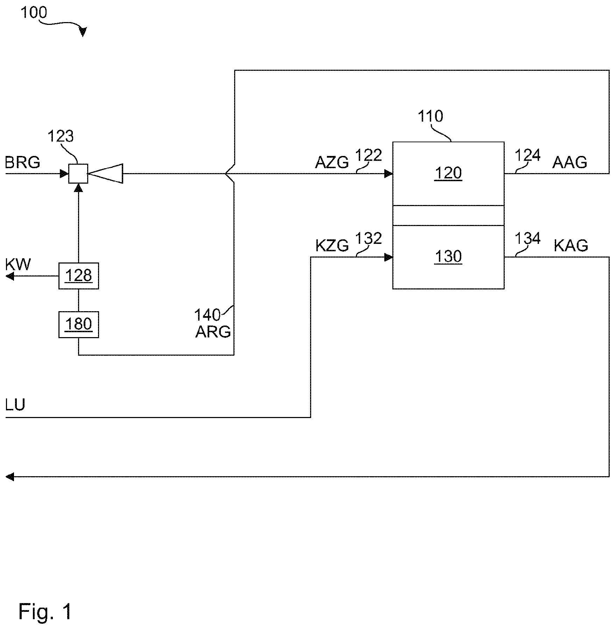

In Figur 1 ist schematisch ein Brennstoffzellensystem 100 dargestellt, welches einen Brennstoffzellenstapel 110 mit einem Anodenabschnitt 120 von einem Kathodenabschnitt 130 aufweist. Der Anodenabschnitt wird über einen Anodenzuführabschnitt 122 mit Anodenzuführgas AZG versorgt und das Anodenabgas AAG über den Anodenabführabschnitt 124 abgeführt. In gleicher Weise wird der Kathodenabschnitt 130 über einen Kathodenzuführabschnitt 132 mit Kathodenzuführgas KZG hier in Form von Luft LU versorgt und das Kathodenabgas KAG über den Kathodenabführabschnitt 134 abgeführt. Wie in der Figur 1 gut zu entnehmen ist, handelt es sich hier bei dem Anodenabschnitt um eine sogenannte Dead-End-Ausbildung, da das Anodenabgas AAG direkt auch zu 100% und damit vollständig als Anoden-Rezirkulationsgas ARG rezirkuliert wird. Dies wird konstruktiv dadurch gelöst, dass der Anodenabführabschnitt 124 in den Anoden-Rezirkulationsabschnitt 140 übergeht. Um für diese Rezirkulation des Anodenabgases AAG eine gewünschte Trocknung zur Verfügung zu stellen, ist im weiteren Verlauf des Anoden-Rezirkulationsabschnitts 140 eine aktive Kühlvorrichtung 180 angeordnet, die aktiv an dieser Stelle und damit frei von externen Kühlanschlüssen eine Wärmesenke zum Kühlen des Anoden-Rezirkulationsgases ARG zur Verfügung stellt. Die Kühlfunktion ist als Kondensationsfunktion ausgebildet, sodass das Anoden-Rezirkulationsgas ARG unter die Siedetemperatur von Wasser, abhängig von dem Partialdruck, vereinfacht z.B. 100 Grad Celsius, gekühlt wird. Das abgekühlte Anodenzirkulationsgas ARG wird damit hinsichtlich des Wasseranteils kondensiert und das nun verflüssigte Kondenswasser KW über einen Separator in den Wasserauslass 128 aus dem Anoden-Rezirkulationsabschnitt 140 ausgeschieden. Das getrocknete Anoden-Rezirkulationsgas ARG wird hier einer Injektorvorrichtung als Mischabschnitt 123 zugeführt und dort mittels Brenngas BRG vermischt, wobei dieses Mischgas dann als Anodenzuführgas AZG wieder dem Anodenabschnitt 120 zugeführt wird. Hier ist gut zu erkennen, dass durch die hundertprozentige Rückführrate eine maximale Effizienz in der Nutzung des Brenngases BRG auch aus dem Anodenabgas AAG erzielt werden kann. Die ansonsten in Kauf zunehmende Reduktion der Nernstspannung durch die Wasserbeladung des Anoden-Rezirkulationsgases ARG kann hier vermieden oder zumindest reduziert werden, da kostengünstig und einfach mithilfe einer aktiven Kühlvorrichtung 180 das enthaltene Wasser zumindest teilweise auskondensiert und über dem Wasserauslass 128 abgeschieden werden kann.

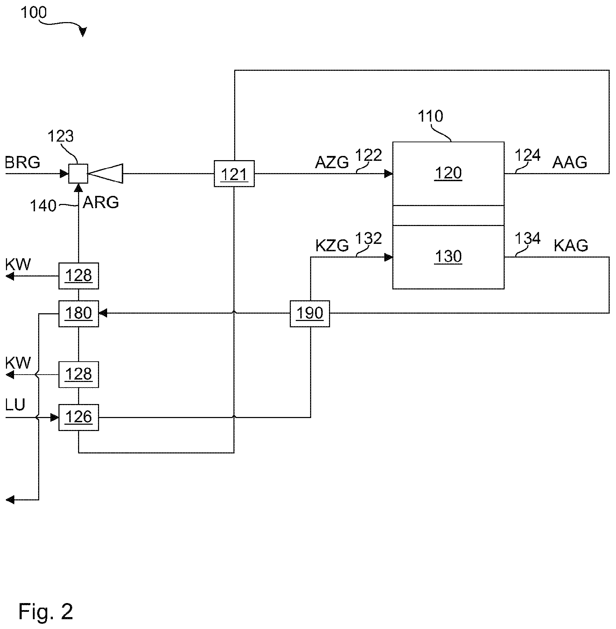

Die Figur 2 zeigt eine Weiterbildung der Ausführungsform der Figur 1. Hier sind weitergelagerte Wärmeübertragungssysteme vorgesehen, die die aktive Kühlvorrichtung 180 ergänzen und damit die Effizienz des Gesamtsystems weiter steigern. Die einzelnen Bestandteile dieses zusätzlichen Temperiersystems sind selbstverständlich frei miteinander kombinierbar, sofern dies technisch sinnvoll ist.

So ist in der Figur 2 ein Anodenzuführ-Wärmetauscher 121 dargestellt, welcher in der Lage ist, einen Wärmeaustausch vom heißen Anodenabgas AAG auf das aufzuheißende Anodenzuführgas AZG zu gewährleisten. Damit kann das Anodenzuführgas AZG konditioniert und vorgeheizt werden, um eine gewünscht höhere Eintrittstemperatur in den Anodenabschnitt 120 aufzuweisen. Im gleichen Zug wird das Anodenabgas AAG hier vorgekühlt, sodass die notwendige Kühlleistung, insbesondere an der aktiven Kühlvorrichtung 180, auf diese Weise nochmals reduziert wird. Die Dimensionierung der aktiven Kühlvorrichtung 180 kann entsprechend kleiner ausfallen.

Um eine weitere Vorkühlung, insbesondere bereits eine Teilkondensation, zur Verfügung zu stellen, ist hier darüber hinaus eine Kondensatorvorrichtung 126 in den Kathodenzuführabschnitt 132 integriert. Dort erfolgt ein Wärmeaustausch zwischen dem Anodenabgas AAG und der als Kathodenzuführgas KZG zugeführten Luft LU. Die Luft wird also von der Umgebung angesaugt und hier durch Wärmeübergang vom heißen Anodenabgas AAG aufgewärmt. In gleicher Weise, insbesondere in Kombination mit dem bereits erläuterten Anodenzuführ-Wärmetauscher 121, wird hier bereits ein erster Kondensationsschritt erzeugt, das Anodenabgas AAG hier als Anoden-Rezirkulationsgas ARG, also auf eine Temperatur von kleiner als 100° Celsius abgekühlt. Damit kondensiert hier bereits zumindest ein Teil des Wassers aus dem Anoden-Rezirkulationsgas ARG aus und wird über einen separaten Wasserauslass 128 als Kondenswasser KW ausgeschieden. Nachgelagert ist nun die aktive Kühlvorrichtung 180, welche ein noch weiteres Abkühlen und damit ein noch stärkeres Trocknen des Anoden-Rezirkulationsgases ermöglicht. Der erfindungsgemäße Effekt wird durch die hier dreistufige Kühlung des Anodenabgases als Anoden-Rezirkulationsgas ARG noch weiter verstärkt.

Weiter zeigt die Figur 2 auch eine zusätzliche Detailausgestaltung der Aktivität der aktiven Kühlvorrichtung 180. Diese ist hier als thermisch aktivierte Kühlvorrichtung 180 ausgebildet. Die thermische Aktivierung wird dabei vom Brennstoffzellensystem selbst zur Verfügung gestellt, da ebenfalls heißes Kathodenabgas KAG aus dem Kathodenabführabschnitt 134 zu dem Aktivierungsbereich der aktiven Kühlvorrichtung 180 geleitet wird. Wie bereits angedeutet, kann eine solche thermisch aktivierte Kühlvorrichtung 180 zum Beispiel als Absorptionswärmepumpe ausgebildet sein, wobei die notwendige Wärmeaktivierung hier durch die erhöhte Temperatur des Kathodenabgases KAG zur Verfügung gestellt wird. Da auch das Kathodenabgas KAG üblicherweise eine sehr hohe Temperatur hat und das Kathodenzuführgas KZG ebenfalls vorkonditioniert auf eine erhöhte Temperatur gebracht werden kann, ist bei der Ausführungsform der Figur 2 in dem Gesamttemperiersystem des Brennstoffzellensystems 100 zusätzlich noch ein Luft-Wärmetauscher 190 vorgesehen. Dieser erlaubt es, das sehr heiße Kathodenabgas KAG in einem ersten Schritt zur Vorkonditionierung des Kathodenzuführgases KZG zu nutzen und anschließend die verbleibende Restwärme für die thermische Aktivierung der aktiven Kühlvorrichtung. In umgekehrter Richtung bedeutet dies für die zugeführte Luft LU als Kathodenzuführgas KZG, dass hier zwei Aufheizstufen, nämlich durch die Kompensatorvorrichtung 126 und den genannten Luft-Wärmetauscher 190, zur Verfügung gestellt sind.

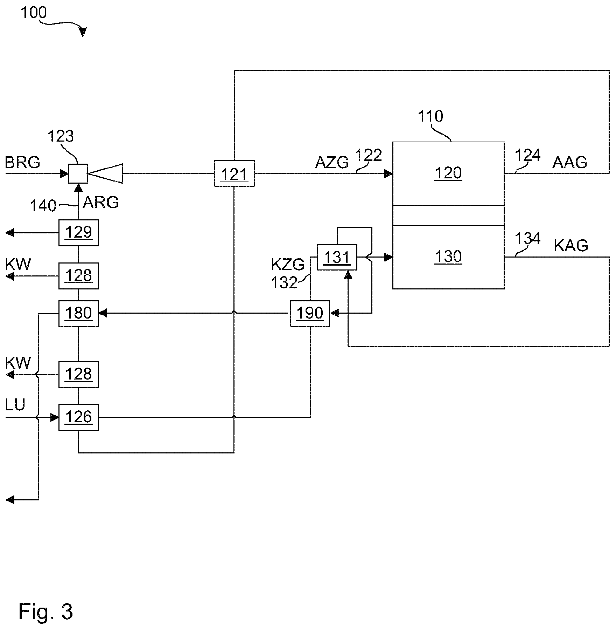

Die Figur 3 bildet die Ausführungsform der Figuren 1 und 2 ebenfalls weiter. Auch hier sind weitere zusätzliche Komponenten hinzugefügt, welche einzeln oder in Kombination mit den anderen Komponenten des Temperiersystems verwendet werden können. Eine dieser Komponenten ist ein Kathodenzuführ-Wärmetauscher 131, welcher hier als dritte Aufheizstufe zum Aufheizen des Kathodenzuführgases 132 verwendet wird. Darüber hinaus ist hier noch ein Ablassventil 129 vorgesehen, welcher aufgrund der hundertprozentigen Rückführrate des Anodenabgases eine zusätzliche Flexibilität zur Verfügung stellt. In Sondersituationen, bei welchen die Menge an Anoden-Rezirkulationsgas ARG größer ist als sie benötigt ist, kann nun ein solches Ablassventil 129 auch als Blowout Ventil bezeichnet werden, eine Ablassfunktion für einen Teil oder das komplette Anoden-Rezirkulationsgas ARG zur Verfügung stellen.

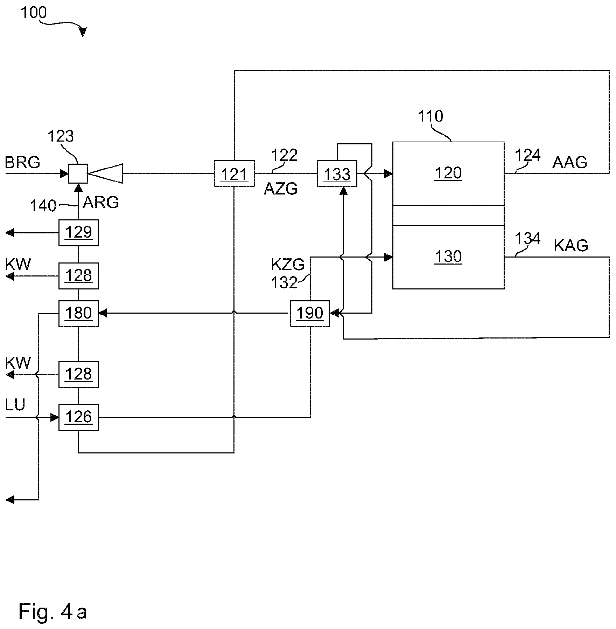

Auch die Figur 4a zeigt weitere Komponenten eines Temperiersystems, hier insbesondere hinsichtlich einer zusätzlichen Temperierung des Anodenzuführgas AZG mit dem aufgeheizten Kathodenabgas KAG. Hierfür ist ein Kathodenabführ-Wärmetauscher 133 im Anodenzuführabschnitt 122 angeordnet, um den genannten Wärmeübergang zu gewährleisten.

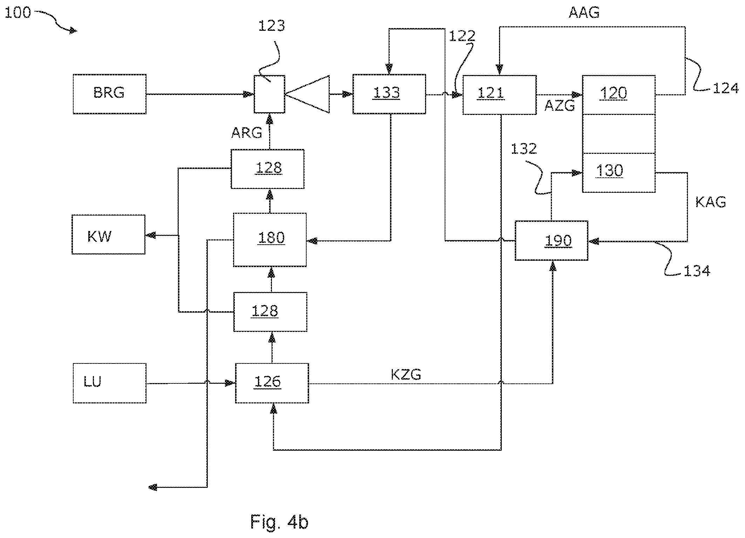

Die Figur 4b zeigt ein Brennstoffzellensystem 100, welches in weiten Teilen jenem der Figur 4a entspricht. In der Fig. 4b ist der ein Kathodenabführ-Wärmetauscher 133 mit der kalten Seite allerdings stromabwärts des Anodenzuführ-Wärmetauschers 121 angeordnet. Das heiße Andenabgas AAG wird also durch eine warme Seite des Anodenzuführ-Wärmetauscher 121 geleitet, wodurch das Anodenzuführgas AZG weiter auf Betriebstemperatur gebracht wird. Das Kathodenabgas KAG wird hier durch die warme Seite des Kathodenabführ-Wärmetauschers 133 geführt wodurch das Anodenzuführgas AZG zuerst vom Kathodenabgas KAG im des Kathodenabführ-Wärmetauscher 133 und dann vom Anodenabführgas AAG im Anodenzuführ-Wärmetauscher 121 erwärmt wird. Bei der Ausführung gemäß der Figur 4a wird im Gegensatz dazu das Anodenzuführgas AZG zuerst vom Anodenabführgas AAG im Anodenzuführ-Wärmetauscher 121 und anschließend vom Kathodenabgas KAG im des Kathodenabführ-Wärmetauscher 133 erwärmt.

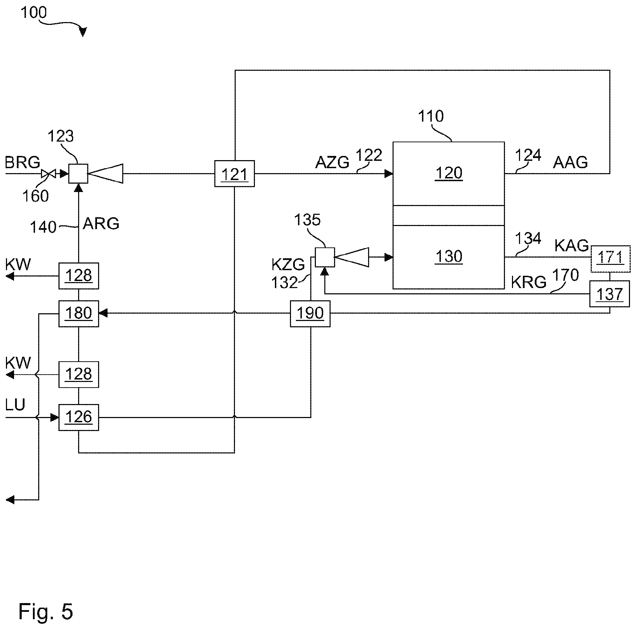

In der Figur 5 sind ebenfalls weitere Komponenten dargestellt, mit welchen sich das Brennstoffzellensystem 100 weiterbilden lässt. Zum einen handelt es sich hier um ein Kathoden-Rezirkulationsgebläse 171 und einen Kathoden-Aufteilabschnitt 137, welche es erlauben, einen Teil des Kathodenabgases KAG in einen Kathoden-Rezirkulationsabschnitt 170 aufzuteilen. Damit kann dieser aufgeteilte Teil des Kathodenabgases KAG als Kathoden-Rezirkulationsgas KRG hier einer Ejektorvorrichtung als Kathoden-Mischabschnitt 135 zugeführt werden und eine Kathodenrezirkulation gewährleistet sein. Somit ist ein variabler Rezirkulationsanteil an der Kathode möglich, wobei unter Teillastbetrieb höhere Rezirkulationsraten einstellbar sind. Das verbleibende Kathodenabgas KAG wird in der bereits mehrfach erläuterten Weise der Katalysatorvorrichtung 136 zugeführt.

Auch in der Figur 5 gezeigt ist in der Brenngaszufuhr für das Brenngas BRG ein Kontrollventil 160. Dieses ist insbesondere quantitativ kontrollierbar ausgebildet, sodass unterschiedliche Volumenströme an Brenngas BRG eingestellt werden können und für unterschiedliche Betriebssituationen unterschiedliche Mengen an Brenngas dem Anoden-Rezirkulationsgas ARG auch tatsächlich zuzumischen.

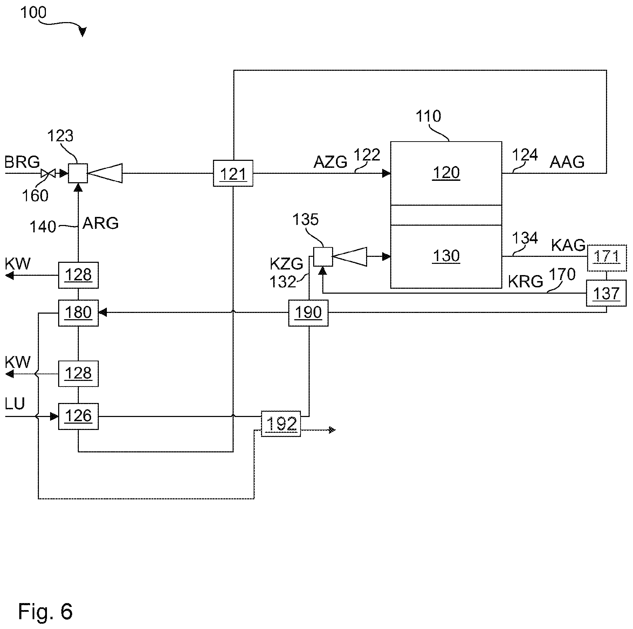

In der Figur 6 ist eine weitere Komponente dargestellt, mit welcher sich das Brennstoffzellensystem 100 weiterbilden lässt. So ist bei der Ausführungsform der Figur 6 in dem Gesamttemperiersystem des Brennstoffzellensystems 100 zusätzlich noch ein weiterer Luft-Wärmetauscher 192 ergänzt, der eine Nutzung von restlicher Wärme des Kathodenabgases KAG vor dessen Auslass in die Umgebung in einem weiteren Schritt zur Vorkonditionierung des Kathodenzuführgases KZG bereitstellt. In umgekehrter Richtung bedeutet dies für die zugeführte Luft LU als Kathodenzuführgas KZG, dass hier drei Aufheizstufen, nämlich durch die Kondensatorvorrichtung 126, den Luft-Wärmetauscher 192 und den Luft-Wärmetauscher 190, zur Verfügung gestellt sind.

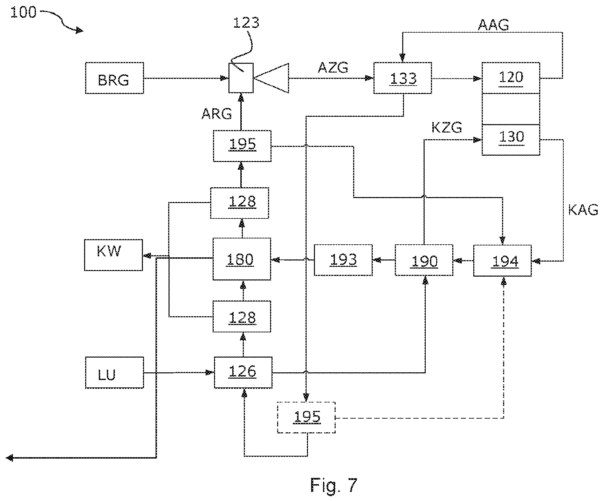

Die Figur 7 zeigt ein weiteres Brennstoffzellensystem 100. Jene Elemente, die das gleiche Bezugszeichen wie in den vorherigen Ausführungsformen haben, entsprechen diesen und werden nicht weiter beschreiben. Hier ist ein Ablassventil 195 vorgesehen, über welches Anodenabgas AAG aus dem Anoden-Rezirkulationsabschnitt 140 ablassbar ist. Durch die gestrichelte Darstellung des Ablassventils 195 ist eine weitere, mögliche Anordnung desselben gezeigt. Das Ablassventil 195 kann notwendig sein, wenn ein Brennstoff wie Wasserstoff oder Ammoniak Verunreinigungen wie Stickstoff oder Kohlenstoffdioxid enthält, um eine Anreicherung der inerten und nicht kondensierbaren Gase im Anodenpfad zu verhindern. Das Ablassventil 195 kann periodisch geöffnet werden oder ein Ablassen kann auch stetig erfolgen. Um Anodenabgas chemisch umzusetzen ist eine Abgas-Umsetz-Vorrichtung 194 vorgesehen, welche beispielsweise als Oxidationskatalysator ausgebildet ist. Darüber hinaus ist zusätzlich eine Nachbehandlungseinheit 193 vorgesehen, welche stromabwärts des Luft-Wärmetauschers 190 angeordnet ist. Die Nachbehandlungseinheit 193 ist insbesondere bei einem Betrieb des Brennstoffzellensystems 100 mit Ammoniak vorteilhaft, um hier nochmal Spuren von Ammoniak umzusetzen, bevor das Abgas an die Umgebung abgegeben wird. Die Nachbehandlungseinheit 193 kann hierfür beispielsweise als Ammoniak-Schlupf-Katalysator (ASC) ausgebildet sein, welcher bei Temperaturen zwischen 200 °C und 500 °C arbeitet.

Die einzelnen Komponenten, insbesondere des Systems aus einer Vielzahl von Wärmetauschern, können dabei frei miteinander kombiniert werden und insbesondere über Kontrollventilsysteme frei schaltbar sein, um auf unterschiedlichste Betriebssituationen des Brennstoffzellensystems 100 möglichst flexibel reagieren zu können.

In diesem Sinne werden nachfolgend weitere alternative Merkmale und Merkmalskombinationen explizit vorgeschlagen.

So kann die Komponente der Ejektorvorrichtung als Kathoden-Mischabschnitt 135 aus der in Fig. 5 gezeigten Ausführungsform des Brennstoffzellensystems 100 auch mit der Ausführungsformen des Brennstoffzellensystems 100 aus Fig. 6 kombiniert kombiniert werden, welches die Komponente des weiteren Luft-Wärmetauschers 192 umfasst.

Ferner kann in einer Ausführungsform, welche die genannten Komponenten der Ejektorvorrichtung als Kathoden-Mischabschnitt 135 aus Fig. 5 und des weiteren Luft-Wärmetauschers 192 aus Fig. 6 umfasst, die Kühlvorrichtung 180 durch eine Wasserkühlung unterstützt werden, die ggf. seitens einer Systemumgebung der Anwendung des Brennstoffzellensystems 100 nutzbar ist.

Außerdem kann in einer Ausführungsform, welche die genannte Komponente des weiteren Luft-Wärmetauschers 192 aus Fig. 6 umfasst, anstelle der Ejektorvorrichtung aus Fig. 5 ein Gebläse als Kathoden-Mischabschnitt 135 verwendet werden.

Alternativ kann in einer Ausführungsform, welche die genannte Komponente des weiteren Luft-Wärmetauschers 192 aus Fig. 6 umfasst, und in der anstelle der Ejektorvorrichtung aus Fig. 5 das genannte Gebläse als Kathoden-Mischabschnitt 135 verwendet wird, die Kühlvorrichtung 180 durch die genannte Wasserkühlung unterstützt werden, die ggf. seitens einer Systemumgebung der Anwendung des Brennstoffzellensystems 100 nutzbar ist.

Die voranstehende Erläuterung der Ausführungsformen beschreibt die vorliegende Erfindung ausschließlich im Rahmen von Beispielen.

### Bezugszeichenliste

- 100: Brennstoffzellensystem
- 110: Brennstoffzellenstapel
- 120: Anodenabschnitt
- 121: Anodenzuführ-Wärmetauscher
- 122: Anodenzuführabschnitt
- 123: Mischabschnitt
- 124: Anodenabführabschnitt
- 126: Kondensatorvorrichtung
- 128: Wasserauslass
- 129: Ablassventil
- 130: Kathodenabschnitt
- 131: Kathodenzuführ-Wärmetauscher
- 132: Kathodenzuführabschnitt
- 133: Kathodenabführ-Wärmetauscher
- 134: Kathodenabführabschnitt
- 135: Kathoden-Mischabschnitt
- 140: Anoden-Rezirkulationsabschnitt
- 160: Kontrollventil
- 170: Kathoden-Rezirkulationsabschnitt
- 171: Kathoden-Rezirkulationsgebläse
- 180: aktive Kühlvorrichtung
- 190: Luft-Wärmetauscher
- 192: Luft-Wärmetauscher
- 193: Nachbehandlungseinheit
- 194: Abgas-Umsetz-Vorrichtung
- 195: Ablassventil

- AZG: Anodenzuführgas
- AAG: Anodenabgas
- ARG: Anoden-Rezirkulationsgas
- KZG: Kathodenzuführgas
- KAG: Kathodenabgas
- KRG: Kathoden-Rezirkulationsgas
- BRG: Brenngas
- LU: Luft
- KW: Kondenswasser

## Patentansprüche

1. Brennstoffzellensystem (100) zur Erzeugung elektrischer Energie, aufweisend einen Brennstoffzellenstapel (110) mit einem Anodenabschnitt (120) und einem Kathodenabschnitt (130), der Anodenabschnitt (120) aufweisend einen Anodenzuführabschnitt (122) für ein Zuführen von Anodenzuführgas (AZG) und einen Anodenabführabschnitt (124) zum Abführen von Anodenabgas (AAG), wobei der Anodenabführabschnitt (124) in einen Anoden-Rezirkulationsabschnitt (140) übergeht zum Rezirkulieren des Anodenabgases (AAG) als Anoden-Rezirkulationsgas (ARG) zum Anodenzuführabschnitt (122), der Kathodenabschnitt (130) aufweisend einen Kathodenzuführabschnitt (132) zum Zuführen von Kathodenzuführgas (KZG) und einen Kathodenabführabschnitt (134) zum Abführen von Kathodenabgas (KAG), wobei im Anoden-Rezirkulationsabschnitt (140) eine aktive Kühlvorrichtung (180) zum Kühlen des Anoden-Rezirkulationsgases (ARG) angeordnet ist, wobei stromabwärts der aktiven Kühlvorrichtung (180) ein Wasserauslass (128) für einen Auslass des in der aktiven Kühlvorrichtung (180) kondensierten Kondenswassers (KW) angeordnet ist, wobei stromabwärts des Wasserauslasses (128) ein Mischabschnitt (123) angeordnet ist für ein Vermischen des Anoden-Rezirkulationsgases (ARG) mit Brenngas (BRG) und für eine Zufuhr als Anodenzuführgas (AZG) in den Anodenzuführabschnitt (122), **dadurch gekennzeichnet, dass** die aktive Kühlvorrichtung (180) eine thermisch aktivierte Kühlvorrichtung aufweist, insbesondere aufweisend eine Absorptionswärmepumpe, wobei die aktive Kühlvorrichtung (180) in wärmeübertragendem Kontakt mit dem Kathodenabführabschnitt (134) angeordnet ist für eine thermische Aktivierung mittels der im Kathodenabgas (KAG) enthaltenen Wärme.

2. Brennstoffzellensystem (100) nach einem der vorangegangenen Ansprüche, **dadurch gekennzeichnet, dass** die aktive Kühlvorrichtung (180) eine elektrisch aktivierte Kühlvorrichtung aufweist.

3. Brennstoffzellensystem (100) nach einem der vorangegangenen Ansprüche, **dadurch gekennzeichnet, dass** der Anoden-Rezirkulationsabschnitt (140) eine Kondensatorvorrichtung (126) in wärmeübertragendem Kontakt mit dem Kathodenzuführabschnitt (132) aufweist für ein Kühlen des Anoden-Rezirkulationsgases (ARG) durch ein Aufheizen des Kathodenzuführgases (KZG), wobei stromabwärts der Kondensatorvorrichtung (126) und stromaufwärts der aktiven Kühlvorrichtung (180) ein Wasserauslass (128) für einen Auslass des in der Kondensatorvorrichtung (126) kondensierten Kondenswassers (KW) angeordnet ist.

4. Brennstoffzellensystem (100) nach einem der vorangegangenen Ansprüche, **dadurch gekennzeichnet, dass** der Kathodenabführabschnitt (134) frei von einer Katalysatorvorrichtung und/oder einem Brenner ausgebildet ist.

5. Brennstoffzellensystem (100) nach einem der vorangegangenen Ansprüche, **dadurch gekennzeichnet, dass** der Anodenabführabschnitt (124) und der Anoden-Rezirkulationsabschnitt (140) frei von einem Aufteilabschnitt ausgebildet sind für eine vollständige oder im Wesentlichen vollständige Rezirkulation des Anodenabgases (AAG) als Anoden-Rezirkulationsgas (RZG).

6. Brennstoffzellensystem (100) nach einem der vorangegangenen Ansprüche, **dadurch gekennzeichnet, dass** im Anoden-Rezirkulationsabschnitt (140) stromabwärts der aktiven Kühlvorrichtung (180) und stromabwärts des Wasserauslasses (128) ein Ablassventil (129) angeordnet ist für ein kontrolliertes Ablassen wenigstens eines Teils des Rezirkulationsgases (RZG).

7. Brennstoffzellensystem (100) nach einem der vorangegangenen Ansprüche, **dadurch gekennzeichnet, dass** der Anodenabführabschnitt (124) einen Anodenzuführ-Wärmetauscher (121) aufweist in wärmeübertragendem Kontakt mit dem Anodenzuführabschnitt (122) für eine Wärmeübertragung vom Anodenabgas (AAG) auf das Anodenzuführgas (AZG).

8. Brennstoffzellensystem (100) nach einem der vorangegangenen Ansprüche, **dadurch gekennzeichnet, dass** der Mischabschnitt (123) als Ejektorvorrichtung ausgebildet ist mit einer Brennstoffzufuhr von Brenngas (BRG) an einem Primäranschluss der Ejektorvorrichtung und dem Anoden-Rezirkulationsabschnitt (140) am Sekundäranschluss der Ejektorvorrichtung.

9. Brennstoffzellensystem (100) nach einem der vorangegangenen Ansprüche, **dadurch gekennzeichnet, dass** der Kathodenzuführabschnitt (132) einen Kathodenzuführ-Wärmetauscher (131) aufweist in wärmeübertragendem Kontakt mit dem Kathodenabführabschnitt (134) für eine Wärmeübertragung vom Kathodenabgas (KAG) auf das Kathodenzuführgas (KZG).

10. Brennstoffzellensystem (100) nach einem der vorangegangenen Ansprüche, **dadurch gekennzeichnet, dass** im Anodenzuführabschnitt (122), vorzugsweise stromabwärts eines Anodenzuführ-Wärmetauschers (121), ein Kathodenabführ-Wärmetauscher (133) angeordnet ist für einen Wärmeübergang vom Kathodenabgas (KAG) auf das Anodenzuführgas (AZG).

11. Brennstoffzellensystem (100) nach einem der vorangegangenen Ansprüche, **dadurch gekennzeichnet, dass** im Anodenzuführabschnitt (122) stromaufwärts des Mischabschnitts (123) ein Kontrollventil (160) zur Kontrolle des Volumenstroms an Brenngas (BRG) durch den Mischabschnitt (123) angeordnet ist.

12. Brennstoffzellensystem (100) nach einem der vorangegangenen Ansprüche, **dadurch gekennzeichnet, dass** der Anodenabführabschnitt (122) frei von einem externen Kühlkreislauf ausgebildet ist.

13. Brennstoffzellensystem (100) nach einem der vorangegangenen Ansprüche, **dadurch gekennzeichnet, dass** im Kathodenzuführabschnitt (132) ein Kathoden-Mischabschnitt (135), insbesondere in Form einer Ejektorvorrichtung, angeordnet ist an deren Sekundanschluss ein Kathoden-Rezirkulationsabschnitt (170) fluidkommunizierend verbunden ist für eine Rezirkulation eines Teils des Kathodenabgases (KZG) als Kathoden-Rezirkulationsgas (KRG).

14. Verfahren für eine Rezirkulation von Anodenabgas (AZG) in einem Brennstoffzellensystem (100) mit den Merkmalen eines der Ansprüche 1 bis 13, als Anoden-Rezirkulationsgas (ARG), aufweisend die folgenden Schritte:
- Kühlen des Anoden-Rezirkulationsgases (ARG) durch aktives Kühlen mittels der aktiven Kühlvorrichtung (180) unter die Siedetemperatur von Wasser,
- Abtrennen des kondensierten Kondenswassers (KW) aus dem Anoden-Rezirkulationsgas (ARG),
- Mischen des getrockneten Anoden-Rezirkulationsgases (ARG) mit einem Brenngas (BRG) zu Anodenzuführgas (AZG).

## Claims

1. Fuel cell system (100) for generating electrical energy, having a fuel cell stack (110) with an anode section (120) and a cathode section (130), the anode section (120) having an anode supply section (122) for supplying anode supply gas (AZG) and an anode discharge section (124) for discharging anode exhaust gas (AAG), wherein the anode discharge section (124) merges into an anode recirculation section (140) for recirculating the anode exhaust gas (AAG) as anode recirculation gas (ARG) to the anode supply section (122), the cathode section (130) comprising a cathode supply section (132) for supplying cathode supply gas (KZG) and a cathode discharge section (134) for discharging cathode exhaust gas (KAG), wherein an active cooling device (180) for cooling the anode recirculation gas (ARG) is arranged in the anode recirculation section (140), wherein a water outlet (128) for an outlet of the condensed water (KW) condensed in the active cooling device (180) is arranged downstream of the active cooling device (180), wherein a mixing section (123) is arranged downstream of the water outlet (128) for mixing the anode recirculation gas (ARG) with fuel gas (BRG) and for supplying it as anode feed gas (AZG) into the anode feed section (122), **characterized in that** the active cooling device (180) comprises a thermally activated cooling device, in particular comprising an absorption heat pump, the active cooling device (180) being arranged in heat-transferring contact with the cathode discharge section (134) for thermal activation by means of the heat contained in the cathode exhaust gas (KAG).

2. Fuel cell system (100) according to one of the preceding claims, **characterized in that** the active cooling device (180) comprises an electrically activated cooling device.

3. Fuel cell system (100) according to one of the preceding claims, **characterized in that** the anode recirculation section (140) comprises a condenser device (126) in heat-transferring contact with the cathode supply section (132) for cooling the anode recirculation gas (ARG) by heating the cathode supply gas (KZG), wherein a water outlet (128) for an outlet of the condensed water (KW) condensed in the condenser device (126) is arranged downstream of the condenser device (126) and upstream of the active cooling device (180).

4. Fuel cell system (100) according to one of the preceding claims, **characterized in that** the cathode discharge section (134) is formed free of a catalyst device and/or a burner.

5. Fuel cell system (100) according to one of the preceding claims, **characterized in that** the anode discharge section (124) and the anode recirculation section (140) are formed free of a splitting section for a complete or substantially complete recirculation of the anode exhaust gas (AAG) as anode recirculation gas (RZG).

6. Fuel cell system (100) according to one of the preceding claims, **characterized in that** a discharge valve (129) is arranged in the anode recirculation section (140) downstream of the active cooling device (180) and downstream of the water outlet (128) for a controlled discharge of at least a part of the recirculation gas (RZG).

7. Fuel cell system (100) according to one of the preceding claims, **characterized in that** the anode feed section (124) comprises an anode feed heat exchanger (121) in heat-transferring contact with the anode feed section (122) for heat transfer from the anode exhaust gas (AAG) to the anode feed gas (AZG).

8. Fuel cell system (100) according to one of the preceding claims, **characterized in that** the mixing section (123) is designed as an ejector device with a fuel supply of fuel gas (BRG) at a primary connection of the ejector device and the anode recirculation section (140) at the secondary connection of the ejector device.

9. Fuel cell system (100) according to one of the preceding claims, **characterized in that** the cathode supply section (132) comprises a cathode supply heat exchanger (131) in heat-transferring contact with the cathode discharge section (134) for heat transfer from the cathode exhaust gas (KAG) to the cathode supply gas (KZG).

10. Fuel cell system (100) according to one of the preceding claims, **characterized in that** a cathode removal heat exchanger (133) is arranged in the anode feed section (122), preferably downstream of an anode feed heat exchanger (121), for a heat transfer from the cathode exhaust gas (KAG) to the anode feed gas (AZG).

11. Fuel cell system (100) according to one of the preceding claims, **characterized in that** a control valve (160) for controlling the volume flow of fuel gas (BRG) through the mixing section (123) is arranged in the anode feed section (122) upstream of the mixing section (123).

12. Fuel cell system (100) according to one of the preceding claims, **characterized in that** the anode feed-off section (122) is formed free of an external cooling circuit.

13. Fuel cell system (100) according to one of the preceding claims, **characterized in that** a cathode mixing section (135), in particular in the form of an ejector device, is arranged in the cathode feed section (132), to the secondary connection of which a cathode recirculation section (170) is connected in a fluid-communicating manner for recirculation of a part of the cathode exhaust gas (KZG) as cathode recirculation gas (KRG).

14. Method for a recirculation of anode exhaust gas (AZG) in a fuel cell system (100) having the features of any one of claims 1 to 13, as anode recirculation gas (ARG), comprising the following steps:
- cooling the anode recirculation gas (ARG) by active cooling by means of the active cooling device (180) below the boiling temperature of water,
- separating the condensed water (KW) from the anode recirculation gas (ARG),
- mixing the dried anode recirculation gas (ARG) with fuel gas (BRG) to form anode feed gas (AZG).

## Revendications

1. Système de pile à combustible (100) pour produire de l'énergie électrique, comprenant un empilement de piles à combustible (110) ayant une section d'anode (120) et une section de cathode (130), la section d'anode (120) comprenant une section d'alimentation d'anode (122) pour alimenter un gaz d'alimentation d'anode (AZG) et une section de décharge d'anode (124) pour décharger le gaz de décharge d'anode (AAG), dans lequel la section de décharge d'anode (124) se transforme en une section de recirculation d'anode (140) pour faire recirculer le gaz d'échappement d'anode (AAG) en tant que gaz de recirculation d'anode (ARG) vers la section d'alimentation d'anode (122), la section de cathode (130) comprenant une section d'alimentation de cathode (132) pour alimenter le gaz d'alimentation de cathode (KZG) et une section de décharge de cathode (134) pour décharger le gaz d'échappement de cathode (KAG), dans lequel un dispositif de refroidissement actif (180) est disposé dans la section de recirculation d'anode (140) pour refroidir le gaz de recirculation d'anode (ARG), dans lequel une sortie d'eau (128) est disposée en aval du dispositif de refroidissement actif (180) pour une sortie de l'eau de condensation (KW) condensée dans le dispositif de refroidissement actif (180), dans lequel une section de mélange (123) est disposée en aval de la sortie d'eau (128) pour mélanger le gaz de recirculation d'anode (ARG) avec le gaz combustible (BRG) et pour l'alimenter en tant que gaz d'alimentation d'anode (AZG) dans la section d'alimentation d'anode (122), **caractérisé en ce que** le dispositif de refroidissement actif (180) comprend un dispositif de refroidissement activé thermiquement, en particulier comprenant une pompe à chaleur à absorption, le dispositif de refroidissement actif (180) étant disposé en contact de transfert de chaleur avec la section de décharge de cathode (134) pour une activation thermique au moyen de la chaleur contenue dans le gaz de décharge de cathode (KAG).

2. Système de pile à combustible (100) selon l'une des revendications précédentes, **caractérisé en ce que** le dispositif de refroidissement actif (180) comprend un dispositif de refroidissement activé électriquement.

3. Système de pile à combustible (100) selon l'une quelconque des revendications précédentes, **caractérisé en ce que** la section de recirculation d'anode (140) comprend un dispositif de condensation (126) en contact de transfert de chaleur avec la section d'alimentation de cathode (132) pour refroidir le gaz de recirculation d'anode (ARG) en chauffant le gaz d'alimentation de cathode (KZG), dans lequel une sortie d'eau (128) est disposée en aval du dispositif de condensation (126) et en amont du dispositif de refroidissement actif (180) pour une sortie de l'eau de condensation (KW) condensée dans le dispositif de condensation (126).

4. Système de pile à combustible (100) selon l'une des revendications précédentes, **caractérisé en ce que** la section de décharge de la cathode (134) est exempte de dispositif catalyseur et/ou de brûleur.

5. Système de pile à combustible (100) selon l'une quelconque des revendications précédentes, **caractérisé en ce que** la section de décharge d'anode (124) et la section de recirculation d'anode (140) sont formées sans section de division pour une recirculation complète ou sensiblement complète du gaz de décharge d'anode (AAG) en tant que gaz de recirculation d'anode (RZG).

6. Système de pile à combustible (100) selon l'une quelconque des revendications précédentes, **caractérisé en ce qu'**une vanne de purge (129) est disposée dans la section de recirculation d'anode (140) en aval du dispositif de refroidissement actif (180) et en aval de la sortie d'eau (128) pour une purge contrôlée d'au moins une partie du gaz de recirculation (RZG).

7. Système de pile à combustible (100) selon l'une quelconque des revendications précédentes, **caractérisé en ce que** la section d'alimentation anodique (124) comprend un échangeur de chaleur d'alimentation anodique (121) en contact de transfert de chaleur avec la section d'alimentation anodique (122) pour un transfert de chaleur du gaz d'échappement anodique (AAG) au gaz d'alimentation anodique (AZG).

8. Système de pile à combustible (100) selon l'une quelconque des revendications précédentes, **caractérisé en ce que** la section de mélange (123) est configurée comme un dispositif d'éjection avec une alimentation en combustible de gaz combustible (BRG) au niveau d'un orifice primaire du dispositif d'éjection et la section de recirculation d'anode (140) au niveau d'un orifice secondaire du dispositif d'éjection.

9. Système de pile à combustible (100) selon l'une quelconque des revendications précédentes, **caractérisé en ce que** la section d'alimentation cathodique (132) comprend un échangeur de chaleur d'alimentation cathodique (131) en contact de transfert de chaleur avec la section de décharge cathodique (134) pour un transfert de chaleur du gaz d'échappement cathodique (KAG) au gaz d'alimentation cathodique (KZG).

10. Système de pile à combustible (100) selon l'une des revendications précédentes, **caractérisé en ce que** dans la section d'alimentation anodique (122), de préférence en aval d'un échangeur de chaleur d'alimentation anodique (121), un échangeur de chaleur d'évacuation cathodique (133) est disposé pour un transfert de chaleur du gaz d'évacuation cathodique (KAG) au gaz d'alimentation anodique (AZG).

11. Système de pile à combustible (100) selon l'une des revendications précédentes, **caractérisé en ce qu'**une vanne de contrôle (160) est disposée dans la section d'alimentation d'anode (122) en amont de la section de mélange (123) pour contrôler le débit volumique de gaz combustible (BRG) à travers la section de mélange (123).

12. Système de pile à combustible (100) selon l'une quelconque des revendications précédentes, **caractérisé en ce que** la section de drainage d'anode (122) est formée sans circuit de refroidissement externe.

13. Système de pile à combustible (100) selon l'une des revendications précédentes, **caractérisé en ce qu'**une section de mélange de cathodes (135), en particulier sous la forme d'un dispositif d'éjection, est disposée dans la section d'amenée de cathodes (132), au raccordement secondaire de laquelle une section de recirculation de cathodes (170) est reliée en communication de fluide pour une recirculation d'une partie du gaz d'échappement de cathodes (KZG) comme gaz de recirculation de cathodes (KRG).

14. Procédé pour une recirculation de gaz d'échappement d'anode (AZG) dans un système de pile à combustible (100) ayant les caractéristiques de l'une des revendications 1 à 13, en tant que gaz de recirculation d'anode (ARG), comprenant les étapes suivantes :
- refroidissement du gaz de recirculation d'anode (ARG) par refroidissement actif au moyen du dispositif de refroidissement actif (180) en dessous de la température d'ébullition de l'eau,
- séparation de l'eau condensée (KW) du gaz de recirculation d'anode (ARG),
- mélange du gaz de recirculation d'anode (ARG) séché avec un gaz combustible (BRG) pour obtenir un gaz d'alimentation d'anode (AZG).
